# FASCICULE DE BREVET EUROPEEN

(11) **EP 3 715 646 B1**
(45) Date de publication et mention de la délivrance du brevet: **25.02.2026**
(21) Numéro de dépôt: 20162583.7
(22) Date de dépôt: 12.03.2020
(51) Int. Cl.: F16B 2/18

(54) **DISPOSITIF DE FIXATION AMOVIBLE**
ABNEHMBARE BEFESTIGUNGSVORRICHTUNG
REMOVABLE ATTACHMENT DEVICE

(30) Priorité: 29.03.2019 FR 1903349
(43) Date de publication de la demande: 30.09.2020
(73) Titulaire: AXENS, 92508 Rueil-Malmaison Cedex (FR)
(72) Inventeur: DELTEIL, Jauffray Salvatore, 92508 RUEIL MALMAISON cedex (FR)
(74) Mandataire: IFP Energies nouvelles

(56) Documents cités:
- WO-A2-02/23051
- DE-C- 565 350
- FR-A1- 2 868 488
- FR-A3- 3 036 750
- JP-A- 2003 039 993

## Description

### Domaine technique

L'objet de l'invention est un dispositif de fixation amovible d'un appareillage sur son support pour un appareillage destiné à être disposé dans une enceinte. Le dispositif de fixation amovible concerne notamment les appareillages de type internes susceptibles d'être installés dans un réacteur, dans un ballon ou dans une colonne. Le dispositif de fixation amovible selon l'invention est typiquement utilisé dans le domaine de la chimie, biochimie, du raffinage ou de la pétrochimie pour des enceintes dans lesquelles sont mises en œuvres des processus chimiques, biochimiques, physiques ou physico-chimiques, en mettant en œuvre éventuellement un lit granulaire.

### Technique antérieure

Dans les enceintes de type réacteur, ballon ou colonne à distiller, sont installés différents appareillages appelés usuellement « internes ». L'installation de chacun de ces appareillages nécessite un support adapté fixé mécaniquement à l'enceinte, constitué par exemple par une poutre ou par un anneau support complet ou partiel, sur lequel l'appareillage est posé puis fixé mécaniquement à l'aide d'un dispositif de fixation.

Les appareillages sont utilisés, par exemple, pour la distribution ou pour la séparation des fluides ou simplement pour supporter du garnissage vrac ou structuré ou un lit de solides granulaires, comme, par exemple, du catalyseur.

Le dispositif concerne, en particulier, les internes démontables (« removable internals » selon la terminologie anglo-saxonne), c'est-à-dire les internes qui sont installés dans l'enceinte avant la mise en opération et qui doivent pouvoir être désinstallés, par exemple, quand il y a des opérations de maintenance. Les internes démontables concernés peuvent être, par exemple, des distributeurs gaz ou liquide ou mixte, ou éventuellement des plateaux distributeurs aptes à distribuer le gaz et le liquide en tête d'un lit catalytique, ou éventuellement des plateaux de colonne à distiller, ou plus largement tout autre type d'interne démontable.

Le dispositif concerne, également, les parties démontables des internes fixes (« fixed internals » selon la terminologie anglo-saxonne) ; c'est-à-dire des parties démontables présentes sur des internes installés à demeure dans une enceinte. Il s'agit par exemple des trappes d'accès, dites « de visite » (« manways » selon la terminologie anglo-saxonne), installées sur un plateau de colonne à distiller ou sur un plateau distributeur en tête de lit catalytique ou sur une grille de support de catalyseur ou sur tout interne fixe qui nécessite une intervention humaine d'un côté de l'interne non accessible.

Plus généralement, le dispositif selon l'invention concerne tout type d'appareillage, apte à être installé dans une enceinte avec son support et nécessitant un dispositif de fixation mécanique amovible pour le fixer sur ledit support.

Un dispositif de fixation amovible connu consiste, comme décrit dans le brevet US7 931 871, à prévoir dans le support une partie perpendiculaire à l'appareillage, ladite partie perpendiculaire comprenant au moins une fente dans laquelle est insérée une clavette. Ladite clavette présente un bord supérieur incliné de manière à ce que la clavette soit forcée et bloquée à l'intérieur de la fente, par exemple à l'aide d'un marteau. Une fois bloquée, ladite clavette maintient l'appareillage fixe. Dans un mode de réalisation préféré, ladite clavette est formée de deux plaques soudées au niveau d'une extrémité. L'écartement de ces deux plaques au niveau de l'extrémité non soudée de la clavette, après insertion de celle-ci dans la fente, assure le serrage de la clavette et de l'interne. Ce dispositif est efficace mais son desserrage peut être amélioré.

Un autre dispositif de fixation, décrit dans la demande de brevet WO2018044476, permet de coupler une première et une deuxième structures l'une à l'autre par l'intermédiaire d'un goujon positionné sur la première structure et d'un corps pivotant entre une position fermée et une position ouverte positionné sur la deuxième structure. Ledit corps pivotant possède au moins une ouverture qui reçoit ledit goujon lorsque le corps est en position fermée. Une goupille sur le goujon permet de fixer le dispositif. Le montage de ce dispositif nécessite un parfait positionnement des deux structures. De plus, le démontage de ce dispositif de fixation peut également être amélioré. Encore un autre dispositif de fixation est décrit dans le document WO0223051 A2.

La présente invention a pour but de perfectionner l'art antérieur, en proposant un dispositif de fixation amovible amélioré, dont la conception rende notamment le montage et le démontage plus faciles et plus rapides, tout en assurant une efficacité de fixation au moins similaire.

### Résumé de l'invention:

L'objet de l'invention est un ensemble comprenant un dispositif de fixation amovible d'un appareillage sur un support, selon la revendication 1, l'ensemble comprenant l'appareillage et ledit support étant apte à être disposé dans une enceinte, tel que ledit support comprend une partie plane qui s'étend dans un plan P et qui est en interface avec une partie plane complémentaire appartenant audit appareillage et tel que ledit dispositif comprend :
- une pièce plane compressible,
- un levier de fonctionnement comprenant un levier à came
- et une tige d'assemblage suivant un axe z présentant une première extrémité liée mécaniquement à ladite partie plane du support et une deuxième extrémité.

Ledit dispositif de fixation amovible est tel que :
- ladite deuxième extrémité de la tige d'assemblage est pourvue d'un moyen de serrage, apte à être agencé en position serrée ;
- ladite pièce plane compressible, ledit levier de fonctionnement comprenant un levier à came et ledit moyen de serrage agencé en position serrée sont successivement disposés parallèlement au plan P autour de ladite tige d'assemblage en un assemblage ;
- ledit levier de fonctionnement comprenant un levier à came est agencé pour qu'une rotation du levier à came autour d'un axe y perpendiculaire à l'axe z de la tige d'assemblage induise un déplacement du levier à came entre une position serrée dans laquelle la pièce plane compressible est comprimée et l'assemblage est fixe, et une position desserrée dans laquelle chaque élément dudit assemblage est amovible.

On comprend par « chaque élément de l'assemblage » chacun des différents composants que comprend l'assemblage pris séparément, c'est-à-dire la pièce plane compressible, le levier de fonctionnement et le moyen de serrage mais aussi tout autre composant additionnel qui serait compris dans l'assemblage comme, par exemple, une rondelle amovible.

On comprend par « autour de la tige » toutes les mises en œuvre possibles d'un élément de l'assemblage dans l'espace qui environne la tige d'assemblage, tout en étant apte à être maintenu par le dispositif de fixation, parmi lesquelles figurent les cinq possibilités suivantes:
- Premièrement, ledit élément est traversé par ladite tige d'assemblage au niveau d'un orifice ou d'une découpe dudit élément, la section de la découpe ou de l'orifice étant avantageusement strictement supérieure à la section de la tige d'assemblage, typiquement d'au moins 5% et d'au plus 10%, ledit élément pouvant être constitué de plusieurs parties adjacentes.
- Deuxièmement, le bord externe dudit élément épaule de façon tangentielle la surface extérieure de la tige.
- Troisièmement, le bord externe dudit élément est légèrement distant de la tige d'assemblage et préférentiellement parallèle à la tangente à la surface externe de la tige.
- Quatrièmement, ledit élément comprend une partie tubulaire dans laquelle est insérée la tige d'assemblage.
- Cinquièmement, ledit élément est enroulé autour de la tige d'assemblage.

Ainsi, chacun des éléments de l'assemblage peut être maintenu par le dispositif de fixation, notamment, en étant traversé par ladite tige d'assemblage ou en épaulant de façon tangentielle la surface extérieure de la tige ou en étant légèrement distant de la tige d'assemblage ou en comprenant une partie tubulaire dans laquelle est insérée la tige d'assemblage ou en étant enroulé autour de la tige d'assemblage.

On comprend par « chaque élément dudit assemblage est amovible » le fait qu'on peut défaire l'assemblage défini plus haut en position desserrée, chaque élément pouvant être séparé des autres, ce qui est notamment le cas du levier de fonctionnement. Avantageusement, le moyen de serrage coopère avec la deuxième extrémité de la tige d'assemblage uniquement : il ne coopère pas, notamment, avec le levier de fonctionnement comprenant le levier à came.

Avantageusement, la manœuvre du levier à came est indépendante du moyen de serrage, il est ainsi possible de passer en position desserrée le levier de fonctionnement , alors que le moyen de serrage reste en position serrée.

Le dispositif selon l'invention présente un temps de desserrage réduit et une manœuvre plus aisée, puisque le desserrage résulte du passage du levier de fonctionnement de la position serrée à la position desserrée et peut se faire manuellement. De même, le dispositif selon l'invention présente un temps de mise en place réduit. Sa manœuvre est aisée, puisque le serrage résulte du passage du levier de fonctionnement de la position desserrée à la position serrée.

Selon l'invention, ledit levier à came du levier de fonctionnement comprend deux cames identiques, parallèles, montées en liaison rotative autour de l'axe y sur une fourche à deux branches, chacune des cames étant située de part et d'autre de ladite fourche. Chacune des cames comprend à sa surface extérieure au moins un point de contact M avec un élément de l'assemblage, ledit point M se déplaçant sur ledit élément et sur la surface extérieure de ladite came, pendant le déplacement du levier à came de la position serrée à la position desserrée.

Cet élément de l'assemblage qui est en contact avec les cames est préférentiellement la pièce plane compressible ou éventuellement une rondelle optionnelle placée entre la pièce plane compressible et le levier à came.

Dans cette variante, la fourche à deux branches permet de positionner le levier autour de la tige d'assemblage très facilement pendant le montage, et facilite le démontage. De plus, les deux cames parallèles espacées de part et d'autres permettent une répartition de l'effort de part et d'autre de la fourche.

Préférentiellement, ladite fourche à deux branches, positionnée entre les deux cames du levier à came double, a une forme de U ou d'oméga Ω ou de C ou de fourche à deux dents. Ainsi, la fourche peut être montée et démontée très facilement autour de la tige d'assemblage.

Selon l'invention, la surface extérieure de chacune des cames comprend une première partie et une deuxième partie telles que:
- lorsque le levier à came est en position serrée, ladite première partie de la surface extérieure de la came est en contact avec un élément de l'assemblage à une distance d par rapport à l'axe y et ladite première partie de la surface extérieure de la came comprime la pièce plane compressible ;
- pendant le déplacement du levier à came entre la position serrée et la position desserrée, ladite deuxième partie de la surface extérieure de la came est en contact avec un élément de l'assemblage en au moins un point M qui évolue en se rapprochant de l'axe y
- lorsque le levier à came est dans la position desserrée, la distance e entre ledit point M et l'axe de rotation y est choisie pour que chaque élément de l'assemblage soit amovible.

On comprend par « qui évolue en se rapprochant de l'axe y » le fait que, lorsque le levier à came évolue entre la position serrée et la position desserrée, ladite deuxième partie de la surface extérieure de la came est au contact de l'assemblage en au moins un point M tel que la distance e entre ledit point M et l'axe de rotation y est inférieure à la distance d.

Dans une variante, ladite première partie de la surface extérieure de la came comprime la pièce plane compressible soit directement, soit par l'intermédiaire d'une ou plusieurs pièces mécaniques insérées entre le levier de fonctionnement et la pièce plane compressible. Dans cette variante, la distance e entre le point de contact M de la came avec un élément de l'assemblage et l'axe y est choisie strictement inférieure à la distance d de telle manière qu'un jeu δ entre le levier de fonctionnement et le moyen de serrage permette que chaque élément de l'assemblage soit amovible quand le levier à came est en position desserrée. Le jeu δ est préférentiellement supérieur ou égal à 0,2 mm, plus préférentiellement supérieur ou égal à 0,5 mm et préférentiellement inférieur ou égale à 5 mm.

Ainsi, la combinaison de la première partie avec la deuxième partie de la surface extérieure de chaque came est parfaitement adaptée pour que le levier à came maintienne fixe l'assemblage lorsque levier à came est en position serrée, et que chaque élément de l'assemblage soit démontable lorsque le levier à came est en position desserrée.

Dans cette variante du dispositif selon l'invention, la première partie de la surface extérieure de chacune des deux cames parallèles dudit levier à came est préférentiellement rectiligne et la surface plane extérieure desdites cames sur la première partie de la surface extérieure est en contact avec un élément de l'assemblage lorsque le levier à came est en position serrée. Dans cette variante, l'assemblage est maintenu bien fixé, même lorsqu'il est soumis à des fluctuations ou des variations de pression liées aux fluctuations des conditions opératoires dans l'unité/l'installation (pression, température, débit et nature du fluide utilisé dans le procédé).

Dans l'invention, la deuxième partie de la surface extérieure de chacune des deux cames parallèles dudit levier à came est courbe, et plus préférentiellement de forme elliptique ou polynomiale ou circulaire excentré.

Le mouvement du levier à came évolue de façon progressive avec continuité de contact assurant un fonctionnement optimal du dispositif de fixation amovible.

Préférentiellement, chacune desdites cames du levier à came est symétrique suivant une symétrie selon un plan P' perpendiculaire auxdites cames et comprenant l'axe de rotation du levier à came y. Ainsi, le levier de fonctionnement ne comprend pas de sens de montage et peut être disposé dans l'assemblage dans les deux sens indifféremment, ce qui facilite le montage pour l'opérateur, et ne nécessite pas l'ajout d'un détrompeur au dispositif.

Préférentiellement, la deuxième partie de la surface extérieure de chacune des cames est elliptique suivant une ellipse de centre O.

Dans cette variante, ledit centre O est avantageusement excentré d'une distance b par rapport à l'axe y de rotation de la came en direction du point de contact M. Dans cette variante, la position excentrée du centre de l'ellipse nécessite qu'une force soit appliquée pour le déplacer vers la position desserrée. Ainsi la position excentrée permet de maintenir le levier à came en position serrée.

Avantageusement, le levier à came comprend un moyen de préhension manuelle ou un moyen motorisé de manœuvre du levier. Ainsi, le levier à came du levier de fonctionnement peut comprendre une poignée ou une extrémité destinée à recevoir une extension afin d'être manœuvré directement par la main de l'opérateur. De même, le levier à came peut être connecté à un dispositif motorisé assurant sur commande le passage du levier de la position serrée à la position desserrée et réciproquement.

Avantageusement, le dispositif selon l'invention est tel que ledit moyen de serrage en position serrée est réglable pour ajuster le couple de serrage sur la tige d'assemblage lorsque le levier de fonctionnement comprenant un levier à came est en position serrée. Ainsi, il est possible de régler finement le couple de serrage du dispositif de fixation amovible.

Avantageusement, le moyen de serrage consiste en un écrou monté sur une partie filetée de la tige d'assemblage dans la deuxième extrémité de ladite tige.

Avantageusement, le dispositif selon l'invention comprend une rondelle optionnelle (« washer » selon la terminologie anglo-saxonne), et avantageusement en forme de U ou d'Ω pour être amovible facilement, apte à être agencée dans l'assemblage entre le levier de fonctionnement et la pièce plane compressible.

Dans une variante préférée, une rondelle est agencée dans l'assemblage entre le levier de fonctionnement comprenant un levier à came et la pièce plane compressible.

Un autre objet de l'invention est un ensemble comprenant (notamment constitué par) un appareillage, un support et le dispositif de fixation amovible selon l'une quelconque des variantes décrites ci-dessus, tel que la partie plane complémentaire dudit appareillage est agencée autour de la tige d'assemblage parallèlement au plan P, en-dessous dudit levier de fonctionnement comprenant un levier à came et au-dessus de la partie plane dudit support, préférentiellement au-dessus de la pièce plane compressible. « Au-dessus » et « au-dessous » sont à comprendre en référence aux composants concernés dans leur position de montage/ de fonctionnement.

Un autre objet de l'invention est un ensemble comprenant (notamment constitué par) une enceinte, un appareillage, un support et le dispositif de fixation amovible selon l'une quelconque des variantes décrites ci-dessus, tel que ladite enceinte est choisie parmi un réacteur, un ballon, une colonne à distiller, une colonne d'extraction, un absorbeur, mettant en œuvre préférentiellement des réactions chimiques ou physico-chimiques dans le domaine de la chimie, pétrochimie, biochimie, raffinage.

Un autre objet de l'invention est un procédé de mise en place de l'ensemble décrit ci-dessus, ledit procédé comprenant les étapes suivantes :
- positionnement de la pièce plane compressible parallèlement à la partie plane du support autour de la tige d'assemblage ;
- positionnement de la partie plane complémentaire de l'appareillage parallèlement à la pièce plane compressible autour de la tige d'assemblage ;
- positionnement du levier de fonctionnement parallèlement à la partie plane complémentaire de l'appareillage autour de la tige d'assemblage ;
- positionnement du moyen de serrage agencé en position serrée parallèlement au levier de fonctionnement comprenant un levier à came autour de la tige d'assemblage ;
- positionnement optionnel d'une rondelle entre le levier de fonctionnement comprenant un levier à came, telle que ladite rondelle est posée autour de la tige d'assemblage au-dessus de la partie plane complémentaire de l'appareillage ;
- rotation du levier à came du levier de fonctionnement autour de l'axe y perpendiculaire à l'axe z de la tige d'assemblage afin de déplacer ledit levier à came entre une position desserrée, dans laquelle chaque élément positionné précédemment est amovible, et une position serrée dans laquelle la pièce plane compressible est comprimée et chaque élément est fixe ;
- réglage optionnel du couple de serrage en agissant sur le moyen de serrage.

Le procédé ainsi décrit est parfaitement adapté pour mettre en place l'ensemble comprenant un appareillage, un support et un dispositif de fixation amovible selon l'une quelconque des variantes décrites ci-dessus.

### Description détaillée :

Avantageusement, la tige d'assemblage s'étend suivant un axe z qui est perpendiculaire au plan P dans lequel s'étend la partie plane du support.

Avantageusement, la section de tige d'assemblage est de forme circulaire ou ovale ou rectangulaire ou carrée, préférentiellement de forme circulaire.

Avantageusement, la première extrémité de la tige d'assemblage est liée mécaniquement avec le support par une soudure ou par un écrou ou par toute autre liaison mécanique connue de l'homme du métier.

Avantageusement, ladite pièce plane compressible est un joint qui peut être du type tresse en fibres de céramique, en feutre ou un patin muni d'un revêtement antiadhésif de type ^{®}Teflon. La tresse peut être enroulée autour de la tige d'assemblage.

Avantageusement, ladite pièce plane compressible peut être en une ou en plusieurs parties. Avantageusement, ladite pièce plane compressible est en forme de disque ou de rectangle muni d'un orifice apte à recevoir la tige d'assemblage.

Avantageusement le moyen de serrage du dispositif de fixation amovible selon l'invention permet d'ajuster la hauteur du dispositif de fixation. Cela permet de fixer des appareillages d'une épaisseur variable.

Avantageusement, chacun des éléments de l'assemblage est en contact avec l'élément qui le suit ou qui le précède soit directement soit par l'intermédiaire d'une pièce mécanique insérée entre l'élément qui le suit ou le précède et ledit élément.

Selon l'invention, le levier de fonctionnement comprend une fourche à deux branches, et ladite fourche à deux branches est munie de deux axes rapportés latéralement sur chacune des branches selon l'axe y, sur lesquels le levier à came est monté en liaison rotative.

Avantageusement, dans une variante, la hauteur h de la fourche à deux branches est strictement inférieure à la largeur W des cames, préférentiellement est supérieur ou égale à 5 mm et inférieure ou égale à 50 mm. Ainsi, le dispositif de fixation amovible est compact en position serrée.

Avantageusement, dans la variante du dispositif où le levier à came comprend deux cames identiques et parallèles et un écrou de serrage, lesdites cames du levier à came sont espacées d'une distance L supérieure ou égale au diamètre de l'outil de serrage de l'écrou, préférentiellement avec un jeu supplémentaire supérieure ou égale à 1 mm, et inférieure ou égale à 100mm, préférentiellement inférieure ou égale à 10 mm.

Avantageusement, dans cette variante, quand la première partie de la surface extérieure de chacune des deux cames est rectiligne, la longueur de ladite première partie rectiligne est supérieure ou égale à 5 mm, préférentiellement supérieure ou égale à 10 mm et inférieure ou égale à 60mm, préférentiellement inférieure ou égale à 50 mm.

Selon l'invention, quand la deuxième partie de la surface extérieure de chacune des cames est courbe, ladite courbe est telle que chaque élément de l'assemblage est démontable, alors même que le moyen de serrage est en position serrée.

Avantageusement, dans cette variante, quand la deuxième partie de la surface extérieure de chacune des cames du levier à came est elliptique, le grand diamètre de l'ellipse est supérieur ou égal à 10 mm, préférentiellement supérieur ou égal à 15 mm et inférieur ou égal à 60 mm, préférentiellement inférieur ou égal à 50 mm. Avantageusement, le petit diamètre de l'ellipse est supérieur ou égal à 7 mm, préférentiellement supérieur ou égal à 12 mm et inférieur ou égal à 45 mm, préférentiellement inférieur ou égal à de 35 mm.

Avantageusement, dans cette variante, quand la deuxième partie de la surface extérieure de chacune des cames du levier à came est elliptique, suivant une ellipse de centre O, ledit centre O est excentré d'une distance b supérieure ou égale à 0,5 mm, préférentiellement supérieure ou égale à 1,0 mm, et/ou préférentiellement inférieure ou égale à 5,0 mm, plus préférentiellement inférieure ou égale à 3,0 mm, en direction du point de contact M.

Avantageusement, quand le levier à came comprend un moyen de préhension manuelle, ledit moyen de préhension manuelle comprend une poignée ou toute autre forme ergonomique permettant la préhension.

Avantageusement, la rondelle comprise optionnellement dans le dispositif selon l'invention a la forme d'un U ou d'un C ou d'un disque mince percé en son centre d'un orifice d'un diamètre supérieur à celui de la tige d'assemblage. Ainsi, la rondelle amovible épaule parfaitement la tige d'assemblage une fois agencée autour de la fourche à deux branches, préférentiellement entre la fourche à deux branches et l'appareillage à fixer. La présence de la rondelle amovible permet de préserver la surface de l'appareillage.

Avantageusement, ladite rondelle est fabriquée à partir d'une tôle métallique plane, d'une épaisseur comprise préférentiellement entre 1 et 10 mm, préférentiellement entre 3 et 6 mm, typiquement 5mm.

Avantageusement, ledit dispositif de fixation amovible selon l'invention est apte à être utilisé pour la fixation dans une enceinte d'un interne démontable sur un support fixé mécaniquement à ladite enceinte. De même, le dispositif de fixation amovible selon l'invention concerne les pièces supportées à maintenir en place sur une pièce de support.

De manière préférée, l'ensemble constitué par l'appareillage et le support est disposé dans une enceinte.

Dans une première variante de l'ensemble comprenant le support, l'appareillage et le dispositif de fixation selon l'invention, ledit appareillage est constitué d'un seul tenant.

Dans une deuxième variante de l'ensemble, alternative à la première, l'appareillage est constitué au niveau de sa partie plane complémentaire de plusieurs parties juxtaposées. Avantageusement, les différentes parties juxtaposées s'ajustent les unes aux autres de manière à entourer, au moins partiellement, la tige d'assemblage. Dans cette deuxième variante, l'appareillage peut être constitué de différentes parties qui sont maintenues par un unique dispositif de fixation amovible.

Préférentiellement, tous les éléments du dispositif de fixation amovibles sont fabriqués dans des tôles d'épaisseur et/ou de métallurgie identiques à l'appareillage, pour lequel il sera installé.

Avantageusement, le levier à came est constitué d'éléments de tôle métallique plane, d'une épaisseur comprise préférentiellement entre 1 et 10 mm, préférentiellement entre 3 et 6 mm, typiquement 5 mm.

Avantageusement, tous les éléments du dispositif sont métalliques.

Avantageusement, les éléments du dispositif sont fabiqués en acier inoxydable choisi notamment parmi l'inox 304, 316 ou 321, préférentiellement en acier inoxydable 321.

Avantageusement, dans l'ensemble constitué par un appareillage, un support et un système de fixation amovible selon l'invention, avec la partie plane complémentaire dudit appareillage agencée autour de la tige d'assemblage, ladite partie plane complémentaire dudit appareillage est agencée dans l'espace qui environne la tige, tout en étant apte à être maintenu par le dispositif de fixation, selon toutes les mises en œuvre possibles, parmi lesquelles figurent les possibilités suivantes, comme évoqué précédemment :
- Premièrement, ladite partie plane complémentaire est traversée par ladite tige d'assemblage au niveau d'un orifice ou d'une découpe, la section de la découpe ou de l'orifice étant avantageusement strictement supérieure à la section de la tige d'assemblage, typiquement d'au moins 5 % et d'au plus 10 %. Dans ce cas, la section de l'orifice est plus préférentiellement strictement supérieure à la section du moyen de serrage pour permettre de démonter l'appareillage, alors que le moyen de serrage est en position serrée.
- Deuxièmement, le bord externe de ladite partie plane complémentaire épaule de façon tangentielle la surface extérieure de la tige.
- Troisièmement, le bord externe de ladite partie plane complémentaire est légèrement distant de la tige d'assemblage et préférentiellement parallèle à la tangente à la surface externe de la tige.
- Quatrièmement, ladite partie plane complémentaire comprend une partie tubulaire dans laquelle est insérée la tige d'assemblage.

Ainsi, ladite partie plane complémentaire peut être maintenue par le dispositif de fixation notamment, en étant traversée par ladite tige d'assemblage ou en épaulant de façon tangentielle la surface extérieure de la tige ou en étant légèrement distante de la tige d'assemblage ou en comprenant une partie tubulaire dans laquelle est insérée la tige d'assemblage.

Avantageusement, dans l'ensemble constitué par un appareillage, un support et un système de fixation amovible selon l'invention, la surface extérieure de chacune des cames du levier à came est préférentiellement en contact avec la partie plane complémentaire appartenant à l'appareillage ou éventuellement avec une rondelle située entre ladite partie plane complémentaire et le levier de fonctionnement comprenant un levier à came.

Dans tout le présent texte, on entend par « support » une pièce destinée à être liée mécaniquement à l'enceinte et adaptée pour supporter un appareillage donné. Généralement, le ou les supports sont fournis avec ledit appareillage. Il s'agit typiquement de poutres ou d'anneaux support ou de parties d'anneaux support, liés mécaniquement à l'enceinte directement ou par l'intermédiaire d'autres pièces mécaniques.

D'autres caractéristiques et avantages de l'invention seront mieux compris et apparaîtront plus clairement à la description d'un mode de réalisation de l'invention, faite ci-après, en se référant aux figures données à titre d'exemple.

### Liste des figures

La figure 1a représente une vue latérale de l'ensemble comprenant un dispositif de fixation amovible (1) selon une première variante de l'invention, d'une partie plane d'un interne de réacteur (A) et d'une poutre (B).
La figure 1b représente une deuxième vue latérale de l'ensemble représenté dans la figure 1a après rotation du levier à came (2).
La figure 1c représente une vue de face de l'ensemble représenté dans la figure 1a avec le levier à came (2) en position desserrée.
La figure 2a représente une vue de dessus du levier de fonctionnement comprenant un levier à came (2) et une fourche à deux branches (8) selon une variante de l'invention.
La figure 2b représente une vue de dessus et une vue latérale d'une partie 9b du levier à came représenté dans la figure 2a.
La figure 3 représente une vue latérale d'un exemple de réalisation d'un dispositif de fixation amovible 1 selon une autre variante de l'invention pour fixer un plateau A sur une poutre B.

### Description des modes de réalisation

Les références représentées sur les figures sont énumérées ci-dessous, en relation avec les composants auxquels elles font référence:
A-interne de réacteur de type plateau
B- Poutre
   1- Dispositif de fixation amovible
   2 - Levier à came
   3 - Tige d'assemblage
   4 - Moyen de serrage
   5 - Pièce plane compressible
   6 - Axe latéraux
   7 - Rondelle optionnelle
   8- Fourche à deux branches
   9a et 9b - Parties du levier à came
   10- Première partie de la surface extérieure d'une came
   11- Deuxième partie de la surface extérieure d'une came
   12- Découpe dans l'interne de type plateau

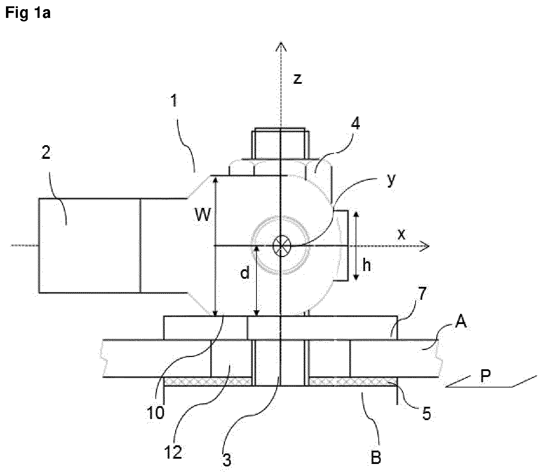

La figure 1a représente une vue latérale de l'ensemble comprenant un dispositif de fixation amovible 1 selon une première variante de l'invention, d'une partie plane d'un interne de réacteur de type plateau A et d'une poutre B, ledit dispositif étant destiné à fixer la partie plane de l'interne de réacteur de type plateau A sur ladite poutre B. Ledit interne est plan au niveau de la zone où est installée le dispositif. Le dispositif 1 est représenté avec un levier de fonctionnement comprenant un levier à came 2 monté sur une fourche à deux branches 8. Le dispositif de fixation amovible 1 comprend un levier de fonctionnement comprenant un levier à came 2, une tige d'assemblage 3, un moyen de serrage constitué par un écrou monté sur une partie filetée de la tige d'assemblage 4 agencé en position serrée, une pièce plane compressible 5 et une rondelle optionnelle 7 en forme de U. L'interne de réacteur de type plateau A est disposé entre la pièce plane compressible 5 et le levier à came 2, avec une rondelle optionnelle 7 entre ces deux derniers éléments. Le dispositif de fixation amovible 1 est représenté avec le levier à came en position serrée: la première partie de la surface extérieure de la came 10 est rectiligne et est en contact avec la rondelle 7 à une distance d par rapport à l'axe y. Dans cette position, la pièce plane compressible 5 est comprimée entre le plateau A et la poutre B et l'ensemble est maintenu fixe. Le plateau A comporte une découpe 12 à travers laquelle passe la tige d'assemblage 3. Ladite découpe est d'une section supérieure à la section du boulon du moyen de serrage 4.

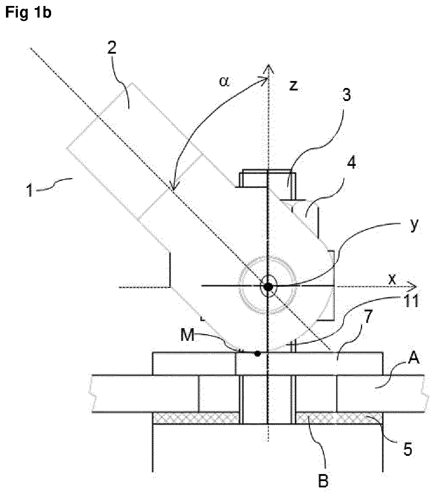

La figure 1b représente une deuxième vue latérale de l'ensemble représenté dans la figure 1a après rotation du levier à came 2 autour de l'axe y depuis la position serrée à une position intermédiaire dans laquelle le levier à came 2 forme un angle α inférieur à 90 degrés avec l'axe z de la tige d'assemblage 3, tous les autres éléments du dispositif étant immobiles. La manœuvre du levier est effectuée sans desserrer le moyen de serrage 4. Dans la position intermédiaire du levier, la deuxième partie de la surface extérieure de chacune des deux cames 11 est au contact de la rondelle 7 en un point M qui se déplace sur la surface de la rondelle 7 et sur la surface de chacune des cames en se rapprochant de l'axe y au fur et à mesure que le levier à came 2 s'approche de la position desserrée qui correspond à la position dans laquelle le levier à came 2 est parallèle à l'axe z.

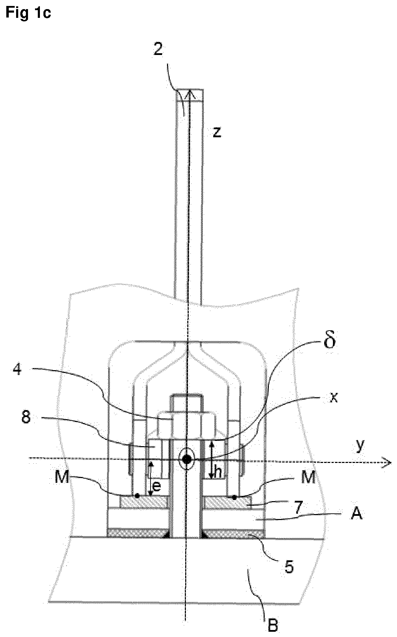

La figure 1c représente une vue de face de l'ensemble représenté dans les figures 1a et 1b après rotation du levier à came 2 autour de l'axe y depuis la position intermédiaire représenté dans la figure 1b vers une position desserrée dans laquelle le levier à came 2 est parallèle à l'axe z de la tige d'assemblage 3. Lorsque le levier à came est dans la position desserrée, chacune des deux cames du levier à came 2 est en contact avec la rondelle amovible 7 au niveau d'un point M. La distance e entre ledit point M et l'axe de rotation y est inférieure à la distance d de la figure 1a. La distance e est avantageusement choisie pour ménager un jeu δ suffisant entre la partie supérieure de la fourche à deux branches 8 et la partie inférieure du moyen de serrage 4 afin que chaque élément de l'ensemble soit amovible. Dans cette position du levier à came 2, la pièce plane compressible 5 n'est pas comprimée, le levier de fonctionnement est amovible, ainsi que le plateau A, la rondelle 7 et la pièce plane compressible 5.

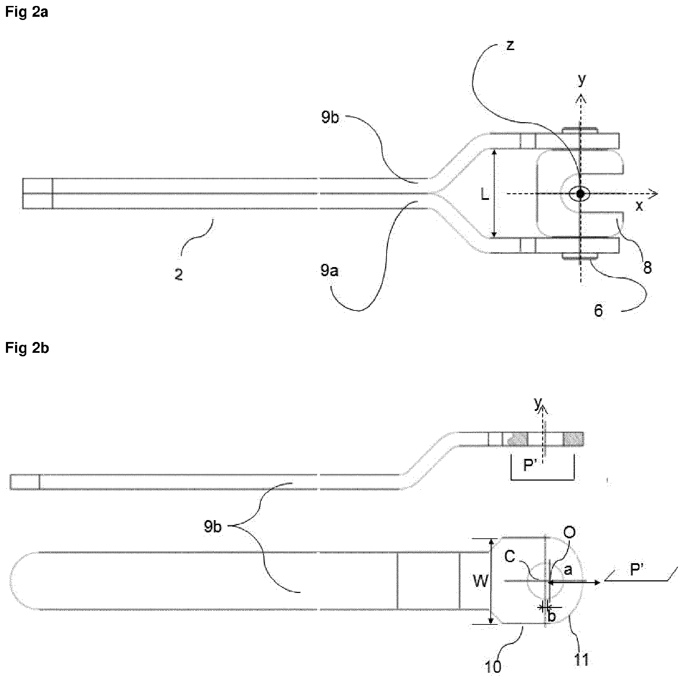

La figure 2a représente une vue de dessus du levier de fonctionnement comprenant un levier à came 2 et une fourche à deux branches 8 selon une variante de l'invention. Ladite fourche à deux branches 8 est en forme de U, munie d'un axe 6 sur chacune des faces latérales. Lesdits axes permettent au levier à came 2 d'être montées sur la fourche à deux branches 8 en liaison rotative autour de l'axe y. Ledit levier à came 2 est fabriqués en associant deux parties symétriques l'une de l'autre 9a et 9b et en les soudant au niveau d'une de leur extrémité de manière à former une poignée. L'autre extrémité de chaque partie est constituée d'une came. Les deux cames sont espacées d'une distance L.

La figure 2b représente une vue de dessus et une vue latérale de la partie 9b du levier à came 2 représenté dans la figure 2a. Dans cette variante, la partie 9b du levier à came est symétrique par rapport au plan P'. P' est le plan perpendiculaire à la partie 9b qui comprend l'axe de rotation du levier à came y. La surface extérieure de la came comprend une première partie rectiligne 10 et une deuxième partie elliptique 11, suivant une ellipse de centre O. La distance a est choisie pour que un jeu suffisant entre le haut du levier à came et la partie inférieure du moyen de serrage se crée lorsque le levier à came est en position desserrée. Le centre O de l'ellipse est excentré d'une distance b par rapport au point C par lequel passe l'axe de rotation du levier y.

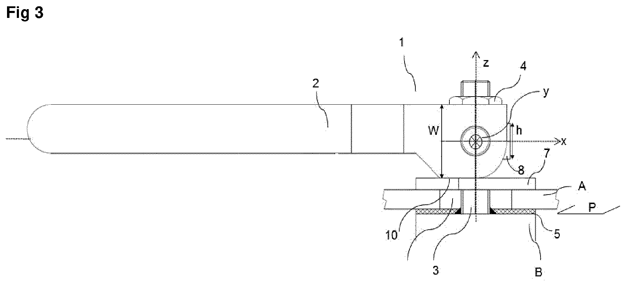

La figure 3 représente une vue latérale d'un exemple de réalisation d'un dispositif de fixation d'un plateau A sur une poutre B dans une autre variante de l'invention. Le dispositif de fixation amovible 1 est fabriqué en acier inoxydable SS321 comme le plateau A et la poutre B. Le dispositif est utilisé pour un plateau A d'une épaisseur typiquement comprise entre 6 et 20 mm. Une tige d'assemblage 3 d'un diamètre de 16 mm est soudée sur la poutre B au niveau de l'emplacement destiné à recevoir le dispositif de fixation 1. Le dispositif de fixation amovible 1 comprend :
- une tige filetée 3 d'un diamètre de 16 mm,
- un écrou 4 d'un diamètre correspondant à celui de la tige filetée 3,
- un joint en fibre de verre 5 d'une épaisseur de 3 mm, apte à être comprimé,
- une rondelle amovible 7 en acier inoxydable d'une épaisseur de 5 mm et en forme de U
- et un levier de fonctionnement constitué par un levier à came 2 comprenant deux cames identiques et parallèles montées latéralement sur les deux cotés d'une fourche à deux branches 8.La fourche à deux branches 8 a une hauteur h de 20 mm, une largeur de 50 mm et une longueur de 50 mm. Chaque came du levier à came a une largeur W de 50 mm.

Pour installer le dispositif 1 de la figure 3 et le plateau A dans l'enceinte pourvue de la poutre B sur laquelle est soudée l'extrémité de la tige filetée 3, l'opérateur procède typiquement de la façon suivante:
- il pose le joint en fibre de verre 5 sur le support B de telle sorte que la tige filetée 3 le traverse.
- puis, il positionne le plateau A de telle sorte que la tige filetée 3 traverse la partie plane du plateau A destinée à être en interface avec la poutre B,
- puis, il place la fourche à deux branches 8 autour de la tige filetée 3, le levier à came 2 étant en position desserrée, c'est-à-dire suivant l'axe z perpendiculaire au plan P,
- ensuite, l'opérateur déplace le levier à came 2 en position serrée, c'est-à-dire avec le levier à came 2 parallèle au plan P,
- puis, s'il n'est pas encore installé, l'opérateur visse l'écrou 4,
- l'opérateur peut ensuite optionnellement ajuster le couple de serrage.

Quand le levier à came 2 est en position serrée, la première partie 10 de la surface extérieure de chacune des cames du levier à came 2 est en contact avec le plateau A sur une longueur de 20 mm. Le joint en fibre de verre 5 est donc comprimé entre le plateau A et la poutre B. Le plateau A est fixe ainsi que tous les éléments du dispositif de fixation amovible 1.

Pour démonter le dispositif 1 de la figure 3 et le plateau A de l'enceinte, l'opérateur procède typiquement de la façon suivante :
- l'opérateur déplace le levier à came 2 de la position serrée à la position desserrée, c'est-à-dire de la position dans laquelle le levier à came 2 est parallèle au plan P à la position dans laquelle le levier à came est perpendiculaire au plan P,
- puis l'opérateur démonte le levier de fonctionnement constitué par la fourche à deux branches 8 et le levier à came 2,
- puis, il démonte le plateau A,
- puis, il démonte le joint en fibre de verre 5,
- enfin, l'opérateur peut éventuellement démonter l'écrou 4.

Dans cet exemple, le plateau A est muni d'un orifice d'une section supérieure à la section de l'écrou 4.

Dans cet exemple, une deuxième partie de la surface extérieure de chacune des cames du levier à came est elliptique, avec une ellipse de ratio 2 :1. Cette partie permet de desserrer le levier à came d'une façon continue et de ménager un jeu entre la partie supérieure de la fourche à deux branches 8 et la partie inférieure de l'écrou 4, de manière à pouvoir démonter le dispositif.

De l'ensemble des variantes représentées aux figures, on voit que le moyen de serrage coopère avec la deuxième extrémité de la tige d'assemblage uniquement : il ne coopère pas avec le levier de fonctionnement comprenant le levier à came.

## Revendications

1. Ensemble comprenant un dispositif de fixation amovible (1), un appareillage (A) et un support (B), ledit dispositif venant fixer de façon amovible l'appareillage (A) sur le support (B), l'ensemble comprenant ledit appareillage et ledit support étant apte à être disposé dans une enceinte, tel que ledit support (B) comprend une partie plane qui s'étend dans un plan (P) et qui est en interface avec une partie plane complémentaire appartenant audit appareillage (A), tel que ledit dispositif comprend :
- une pièce plane compressible (5) ;
- un levier de fonctionnement comprenant un levier à came (2) ;
- et une tige d'assemblage (3) suivant un axe (z) présentant une première extrémité liée mécaniquement à ladite partie plane du support (B) et une deuxième extrémité ; et où
- ladite deuxième extrémité de la tige d'assemblage (3) est pourvue d'un moyen de serrage (4), apte à être agencé en position serrée;
- ladite pièce plane compressible (5), ledit levier de fonctionnement comprenant un levier à came (2) et ledit moyen de serrage (4) agencé en position serrée sont successivement disposés parallèlement au plan (P) autour de ladite tige d'assemblage (3) en un assemblage;
- ledit levier de fonctionnement comprenant un levier à came (2) est agencé pour qu'une rotation du levier à came (2) autour d'un axe (y) perpendiculaire à l'axe (z) de la tige d'assemblage (3) induise un déplacement du levier à came (2) entre une position serrée dans laquelle la pièce plane compressible (5) est comprimée et l'assemblage est fixe, et une position desserrée dans laquelle chaque élément dudit assemblage est amovible,
- ledit levier à came (2) du levier de fonctionnement comprenant deux cames identiques, parallèles, montées en liaison rotative autour d'un axe (y) sur une fourche à deux branches (8), chacune des cames étant située de part et d'autre de ladite fourche et comprend à sa surface extérieure au moins un point de contact (M) avec un élément de l'assemblage, ledit point (M) se déplaçant sur ledit élément et sur la surface extérieure de ladite came, pendant le déplacement du levier à came (2) de la position serrée à la position desserrée,
- le moyen de serrage (4) consistant en un écrou monté sur une partie filetée de la tige d'assemblage (3) dans la deuxième extrémité de ladite tige,
- la surface extérieure de chacune des cames comprenant une première partie (10) et une deuxième partie (11) telles que :
- lorsque le levier à came (2) est en position serrée, ladite première partie de la surface extérieure de la came (10) est en contact avec un élément de l'assemblage à une distance (d) par rapport à l'axe (y) et ladite première partie de la surface extérieure de la came comprime la pièce plane compressible (5) ;
- pendant le déplacement du levier à came (2) de la position serrée à la position desserrée, ladite deuxième partie de la surface extérieure de la came (11) est au contact avec un élément de l'assemblage en au moins un point M qui évolue en se rapprochant de l'axe (y) ;
- lorsque le levier à came est dans la position desserrée, la distance (e ) entre ledit point (M) et l'axe de rotation (y) est choisie pour que chaque élément de l'assemblage soit amovible,
- la deuxième partie de la surface extérieure de chacune des cames est courbe, ladite courbe est telle que chaque élément de l'assemblage est démontable, alors même que le moyen de serrage est en position serrée.

2. Ensemble selon la revendication 1, **caractérisé en ce que** ladite fourche à deux branches (8) a une forme de U ou de C ou d'oméga ou de fourche à deux dents.

3. Ensemble selon la revendication 1 ou 2, **caractérisé en ce que** la première partie de la surface extérieure de chacune des deux cames parallèles dudit levier à came (2) est rectiligne et la surface plane extérieure desdites cames sur la première partie est en contact avec un élément de l'assemblage lorsque le levier à came (2) est en position serrée.

4. Ensemble selon l'une des revendications précédentes, **caractérisé en ce que** la deuxième partie de la surface extérieure de chacune des deux cames parallèles dudit levier à came (2) est de forme elliptique ou polynomiale ou circulaire excentré.

5. Ensemble selon l'une des revendications précédentes, **caractérisé en ce que** la deuxième partie de la surface extérieure de chacune des cames est elliptique suivant une ellipse de centre O, tel que ledit centre O est avantageusement excentré d'une distance (b) par rapport à l'axe (y) de rotation de la came.

6. Ensemble selon l'une des revendications 1 à 5, **caractérisé en ce que** chacune desdites cames du levier à came (2) est symétrique suivant une symétrie selon un plan (P') perpendiculaire auxdites cames et comprenant l'axe de rotation du levier à came (y).

7. Ensemble selon l'une des revendications précédentes, **caractérisé en ce que** le levier à came (2) comprend un moyen de préhension manuelle ou un moyen motorisé de manœuvre du levier.

8. Ensemble selon l'une des revendications précédentes, **caractérisé en ce que** ledit moyen de serrage (4) en position serrée est réglable pour ajuster le couple de serrage sur la tige d'assemblage (3) lorsque le levier de fonctionnement comprenant un levier à came (2) est en position serrée.

9. Ensemble selon l'une des revendications précédentes, **caractérisé en ce qu'**une rondelle (7) est agencée dans l'assemblage entre le levier de fonctionnement comprenant un levier à came (2) et la pièce plane compressible (5).

10. Ensemble selon l'une des revendications précédentes, **caractérisé en ce que** la partie plane complémentaire dudit appareillage est agencée autour de la tige d'assemblage parallèlement au plan (P) en-dessous dudit levier de fonctionnement comprenant un levier à came (2) et au-dessus de la partie plane dudit support (B), préférentiellement au-dessus de la pièce plane compressible(5).

11. Ensemble selon l'une des revendications précédentes, **caractérisé en ce que** la manœuvre du levier à came (2) est indépendante du moyen de serrage (4).

12. Ensemble comprenant une enceinte, l'appareillage (A), le support (B) et le dispositif de fixation amovible (1) selon l'une des revendications 1 à 12, **caractérisé en ce que** ladite enceinte est choisie parmi un réacteur, un ballon, une colonne à distiller, une colonne d'extraction, un absorbeur, mettant en œuvre préférentiellement des réactions chimiques ou physico-chimiques dans le domaine de la chimie, pétrochimie, biochimie, raffinage.

13. Procédé de mise en place de l'ensemble selon l'une des revendications précédentes, ledit procédé comprenant les étapes suivantes :
- positionnement de la pièce plane compressible (5) parallèlement à la partie plane du support (B) autour de la tige d'assemblage (3) ;
- positionnement de la partie plane complémentaire de l'appareillage (A) parallèlement à la pièce plane compressible (5) autour de la tige d'assemblage (3) ;
- positionnement du levier de fonctionnement parallèlement à la partie plane complémentaire de l'appareillage (A) autour de la tige d'assemblage (3) ;
- positionnement du moyen de serrage (4) agencé en position serrée parallèlement au levier de fonctionnement comprenant un levier à came (2) autour de la tige d'assemblage (3) ;
- positionnement optionnel d'une rondelle (7) entre le levier de fonctionnement comprenant un levier à came (2), telle que ladite rondelle (7) est posée autour de la tige d'assemblage (3) au-dessus de la partie plane complémentaire de l'appareillage (A) ;
- rotation du levier à came du levier de fonctionnement (2) autour de l'axe (y) perpendiculaire à l'axe (z) de la tige d'assemblage (3) afin de déplacer ledit levier à came entre une position desserrée dans laquelle chaque élément positionné précédemment est amovible et une position serrée dans laquelle la pièce plane compressible (5) est comprimée et chaque élément est fixe ;
- réglage optionnel du couple de serrage en agissant sur le moyen de serrage (4).

## Patentansprüche

1. Anordnung, welche eine abnehmbare Befestigungsvorrichtung (1), eine Apparatur (A) und eine Halterung (B) umfasst, wobei die Vorrichtung die Apparatur (A) abnehmbar auf der Halterung (B) befestigt, wobei die Anordnung, welche die Apparatur und die Halterung umfasst, in einem Behälter angeordnet werden kann, wobei die Halterung (B) einen ebenen Abschnitt umfasst, der sich in einer Ebene (P) erstreckt und der eine Schnittstelle mit einem komplementären ebenen Abschnitt bildet, der zu der Apparatur (A) gehört, wobei die Vorrichtung umfasst:
- ein zusammendrückbares ebenes Teil (5);
- einen Bedienungshebel, der einen Nockenhebel (2) umfasst;
- und eine Montagestange (3) entlang einer Achse (z), die ein erstes Ende, das mit dem ebenen Abschnitt der Halterung (B) mechanisch verbunden ist, und ein zweites Ende aufweist;
und wobei:
- das zweite Ende der Montagestange (3) mit einem Spannmittel (4) versehen ist, das in einer festgespannten Position angeordnet werden kann;
- das zusammendrückbare ebene Teil (5), der einen Nockenhebel (2) umfassende Bedienungshebel und das in einer festgespannten Position angeordnete Spannmittel (4) nacheinander parallel zur Ebene (P) um die Montagestange (3) herum in einem Zusammenbau angeordnet sind;
- der einen Nockenhebel (2) umfassende Bedienungshebel dazu eingerichtet ist, dass eine Drehung des Nockenhebels (2) um eine zur Achse (z) der Montagestange (3) senkrechte Achse (y) eine Verlagerung des Nockenhebels (2) zwischen einer festgespannten Position, in der das zusammendrückbare ebene Teil (5) zusammengedrückt wird und der Zusammenbau fest ist, und einer gelockerten Position, in der jedes Element des Zusammenbaus abnehmbar ist, bewirkt,
- wobei der Nockenhebel (2) des Bedienungshebels zwei identische, parallele Nocken umfasst, die in einer Drehverbindung um eine Achse (y) an einer Gabel mit zwei Schenkeln (8) angebracht sind, wobei jeder der Nocken sich beiderseits der Gabel befindet und an seiner Außenfläche mindestens einen Kontaktpunkt (M) mit einem Element des Zusammenbaus umfasst, wobei dieser Punkt (M) sich während der Verlagerung des Nockenhebels (2) von der festgespannten Position zu der gelockerten Position auf dem Element und auf der Außenfläche des Nockens bewegt,
- wobei das Spannmittel (4) aus einer Mutter besteht, die auf einem mit einem Gewinde versehenen Abschnitt der Montagestange (3) am zweiten Ende dieser Stange angebracht ist,
- wobei die Außenfläche jedes der Nocken einen ersten Abschnitt (10) und einen zweiten Abschnitt (11) umfasst, derart, dass:
- wenn sich der Nockenhebel (2) in der festgespannten Position befindet, der erste Abschnitt (10) der Außenfläche des Nockens sich in Kontakt mit einem Element des Zusammenbaus in einem Abstand (d) bezüglich der Achse (y) befindet und der erste Abschnitt der Außenfläche des Nockens das zusammendrückbare ebene Teil (5) zusammendrückt;
- während der Verlagerung des Nockenhebels (2) von der festgespannten Position zu der gelockerten Position der zweite Abschnitt (11) der Außenfläche des Nockens sich in Kontakt mit einem Element des Zusammenbaus an mindestens einem Punkt M befindet, der sich bewegt, wobei er sich der Achse (y) nähert;
- wenn sich der Nockenhebel in der gelockerten Position befindet, der Abstand (e) zwischen dem Punkt (M) und der Drehachse (y) so gewählt ist, dass jedes Element des Zusammenbaus abnehmbar ist,
- der zweite Abschnitt der Außenfläche jedes der Nocken gekrümmt ist, wobei die Krümmung so beschaffen ist, dass jedes Element des Zusammenbaus demontierbar ist, sogar dann, wenn sich das Spannmittel in der festgespannten Position befindet.

2. Anordnung nach Anspruch 1, **dadurch gekennzeichnet, dass** die Gabel mit zwei Schenkeln (8) eine U- oder C- oder Omega-Form oder Form einer Gabel mit zwei Zinken aufweist.

3. Anordnung nach Anspruch 1 oder 2, **dadurch gekennzeichnet, dass** der erste Abschnitt der Außenfläche jedes der zwei parallelen Nocken des Nockenhebels (2) gerade ist und die ebene Außenfläche der Nocken auf dem ersten Abschnitt sich in Kontakt mit einem Element des Zusammenbaus befindet, wenn sich der Nockenhebel (2) in der festgespannten Position befindet.

4. Anordnung nach einem der vorhergehenden Ansprüche, **dadurch gekennzeichnet, dass** der zweite Abschnitt der Außenfläche jedes der zwei parallelen Nocken des Nockenhebels (2) von elliptischer oder polygonaler oder exzentrisch kreisförmiger Form ist.

5. Anordnung nach einem der vorhergehenden Ansprüche, **dadurch gekennzeichnet, dass** der zweite Abschnitt der Außenfläche jedes der Nocken elliptisch entsprechend einer Ellipse mit dem Mittelpunkt O ist, wobei der Mittelpunkt O vorteilhafterweise um einen Abstand (b) exzentrisch bezüglich der Drehachse (y) des Nockens angeordnet ist.

6. Anordnung nach einem der Ansprüche 1 bis 5, **dadurch gekennzeichnet, dass** jeder der Nocken des Nockenhebels (2) symmetrisch mit einer Symmetrie bezüglich einer Ebene (P') ist, die senkrecht zu den Nocken ist und die Drehachse des Nockenhebels (y) umfasst.

7. Anordnung nach einem der vorhergehenden Ansprüche, **dadurch gekennzeichnet, dass** der Nockenhebel (2) ein Mittel zum manuellen Ergreifen oder ein motorisiertes Mittel zur Betätigung des Hebels umfasst.

8. Anordnung nach einem der vorhergehenden Ansprüche, **dadurch gekennzeichnet, dass** das Spannmittel (4) in der festgespannten Position regulierbar ist, um das Spannmoment auf der Montagestange (3) zu verstellen, wenn sich der einen Nockenhebel (2) umfassende Bedienungshebel in der festgespannten Position befindet.

9. Anordnung nach einem der vorhergehenden Ansprüche, **dadurch gekennzeichnet, dass** eine Unterlegscheibe (7) in dem Zusammenbau zwischen dem einen Nockenhebel (2) umfassenden Bedienungshebel und dem zusammendrückbaren ebenen Teil (5) angeordnet ist.

10. Anordnung nach einem der vorhergehenden Ansprüche, **dadurch gekennzeichnet, dass** der komplementäre ebene Abschnitt der Apparatur um die Montagestange herum parallel zur Ebene (P) unterhalb des einen Nockenhebel (2) umfassenden Bedienungshebels und oberhalb des ebenen Abschnitts der Halterung (B), vorzugsweise oberhalb des zusammendrückbaren ebenen Teils (5), angeordnet ist.

11. Anordnung nach einem der vorhergehenden Ansprüche, **dadurch gekennzeichnet, dass** die Betätigung des Nockenhebels (2) unabhängig von dem Spannmittel (4) ist.

12. Anordnung, welche einen Behälter, die Apparatur (A), die Halterung (B) und die abnehmbare Befestigungsvorrichtung (1) nach einem der Ansprüche 1 bis 12 umfasst, **dadurch gekennzeichnet, dass** der Behälter aus einem Reaktor, einem Kolben, einer Destillationskolonne, einer Extraktionskolonne und einem Absorber ausgewählt ist, in dem vorzugsweise chemische oder physikalisch-chemische Reaktionen im Bereich der Chemie, Petrochemie, Biochemie, Raffination durchgeführt werden.

13. Verfahren zur Installation der Anordnung nach einem der vorhergehenden Ansprüche, wobei das Verfahren die folgenden Schritte umfasst:
- Positionierung des zusammendrückbaren ebenen Teils (5) parallel zu dem ebenen Abschnitt der Halterung (B) um die Montagestange (3) herum;
- Positionierung des komplementären ebenen Abschnitts der Apparatur (A) parallel zu dem zusammendrückbaren ebenen Teil (5) um die Montagestange (3) herum;
- Positionierung des Bedienungshebels parallel zu dem komplementären ebenen Abschnitt der Apparatur (A) um die Montagestange (3) herum;
- Positionierung des in der festgespannten Position angeordneten Spannmittels (4) parallel zu dem einen Nockenhebel (2) umfassenden Bedienungshebel um die Montagestange (3) herum;
- optionale Positionierung einer Unterlegscheibe (7) zwischen dem einen Nockenhebel (2) umfassenden Bedienungshebel, wobei die Unterlegscheibe (7) oberhalb des komplementären ebenen Abschnitts der Apparatur (A) um die Montagestange (3) herum gelegt wird;
- Drehung des Nockenhebels (2) des Bedienungshebels um die zur Achse (z) der Montagestange (3) senkrechte Achse (y), um den Nockenhebel zwischen einer gelockerten Position, in der jedes zuvor positionierte Element abnehmbar ist, und einer festgespannten Position, in der das zusammendrückbare ebene Teil (5) zusammengedrückt wird und jedes Element fest ist, zu verlagern;
- optionale Regulierung des Spannmoments durch Einwirken auf das Spannmittel (4).

## Claims

1. Assembly comprising a removable fixing device (1), equipment (A) and a support (B), said device removably fixing the equipment (A) on the support (B), the assembly comprising said equipment and said support being able to be disposed in an enclosure, such that said support (B) comprises a planar part which extends in a plane (P) and which is at the interface with a complementary planar part belonging to said equipment (A), such that said device comprises:
- a compressible planar piece (5);
- an operating lever comprising a cam lever (2);
- and an assembly rod (3) along an axis (z) having a first end linked mechanically to said planar part of the support (B) and a second end;
and wherein:
- said second end of the assembly rod (3) is provided with a tightening means (4) capable of being arranged in tightened position;
- said compressible planar piece (5), said operating lever comprising a cam lever (2) and said tightening means (4) arranged in tightened position are successively disposed parallel to the plane (P) around said assembly rod (3) in an assemblage;
- said operating lever comprising a cam lever (2) is arranged so that a rotation of the cam lever (2) about an axis (y) at right angles to the axis (z) of the assembly rod (3) induces a displacement of the cam lever (2) between a tightened position in which the compressible planar piece (5) is compressed and the assemblage is fixed, and a loosened position in which each element of said assemblage is removable,
- said cam lever (2) of the operating lever comprising two parallel identical cams, mounted with rotary link about an axis (y) on a two-branch fork (8), each of the cams being situated on either side of said fork and comprising, on its outer surface, at least one point of contact (M) with an element of the assemblage, said point (M) being displaced on said element and on the outer surface of said cam, during the displacement of the cam lever (2) from the tightened position to the loosened position,
- the tightening means (4) consisting of a nut mounted on a threaded part of the assembly rod (3) in the second end of said rod,
- the outer surface of each of the cams comprising a first part (10) and a second part (11) such that:
- when the cam lever (2) is in tightened position, said first part of the outer surface of the cam (10) is in contact with an element of the assemblage at a distance (d) relative to the axis (y) and said first part of the outer surface of the cam compresses the compressible planar piece (5);
- during the displacement of the cam lever (2) from the tightened position to the loosened position, said second part of the outer surface of the cam (11) is in contact with an element of the assemblage at at least one point M which changes by approaching the axis (y);
- when the cam lever is in the loosened position, the distance (e) between said point (M) and the axis of rotation (y) is chosen so that each element of the assemblage is removable,
- the second part of the outer surface of each of the cams is curved, said curve is such that each element of the assemblage is removable, even when the tightening means is in tightened position.

2. Assembly according to Claim 1, **characterized in that** said two-branch fork (8) has a U or C or omega form or the form of a fork with two teeth.

3. Assembly according to Claim 1 or 2, **characterized in that** the first part of the outer surface of each of the two parallel cams of said cam lever (2) is rectilinear and the outer planar surface of said cams on the first part is in contact with an element of the assemblage when the cam lever (2) is in tightened position.

4. Assembly according to one of the preceding claims, **characterized in that** the second part of the outer surface of each of the two parallel cams of said cam lever (2) is of elliptical or polynomial or off-centre circular form.

5. Assembly according to one of the preceding claims, **characterized in that** the second part of the outer surface of each of the cams is elliptical according to an ellipse of centre O, such that said centre O is advantageously off-centre by a distance (b) relative to the axis (y) of rotation of the cam.

6. Assembly according to one of Claims 1 to 5, **characterized in that** each of said cams of the cam lever (2) is symmetrical according to a symmetry on a plane (P') at right angles to said cams and comprising the axis of rotation of the cam lever (y).

7. Assembly according to one of the preceding claims, **characterized in that** the cam lever (2) comprises a manual gripping means or a motorized lever manoeuvring means.

8. Assembly according to one of the preceding claims, **characterized in that** said tightening means (4) in tightened position is adjustable to adjust the tightening torque on the assembly rod (3) when the operating lever comprising a cam lever (2) is in tightened position.

9. Assembly according to one of the preceding claims, **characterized in that** a washer (7) is arranged in the assemblage between the operating lever comprising a cam lever (2) and the compressible planar piece (5).

10. Assembly according to one of the preceding claims, **characterized in that** the complementary planar part of said equipment is arranged around the assembly rod parallel to the plane (P) below said operating lever comprising a cam lever (2) and above the planar part of said support (B), preferentially above the compressible planar piece (5).

11. Assembly according to one of the preceding claims, **characterized in that** the manoeuvring of the cam lever (2) is independent of the tightening means (4).

12. Assembly comprising an enclosure, the equipment (A), the support (B) and the removable fixing device (1) according to one of Claims 1 to 12, **characterized in that** said enclosure is chosen from among a reactor, a balloon tank, a distillation column, an extraction column, an absorber, preferentially implementing chemical or physico-chemical reactions in the field of chemistry, petrochemistry, biochemistry or refining.

13. Method for installing the assembly according to one of the preceding claims, said method comprising the following steps:
- positioning the compressible planar piece (5) parallel to the planar part of the support (B) around the assembly rod (3);
- positioning the complementary planar part of the equipment (A) parallel to the compressible planar piece (5) around the assembly rod (3);
- positioning the operating lever parallel to the complementary planar part of the equipment (A) around the assembly rod (3);
- positioning the tightening means (4) arranged in tightened position parallel to the operating lever comprising a cam lever (2) around the assembly rod (3);
- optionally positioning a washer (7) between the operating lever comprising a cam lever (2), such that said washer (7) is placed around the assembly rod (3) above the complementary planar part of the equipment (A);
- rotating the cam lever of the operating lever (2) about the axis (y) at right angles to the axis (z) of the assembly rod (3) in order to displace said cam lever between a loosened position in which each element positioned previously is removable and a tightened position in which the compressible planar piece (5) is compressed and each element is fixed;
- optionally adjusting the tightening torque by acting on the tightening means (4).
